# EUROPEAN PATENT APPLICATION

(11) **EP 3 173 176 A1**
(43) Date of publication of application: **31.05.2017**
(21) Application number: 15825056.3
(22) Date of filing: 21.07.2015
(51) Int. Cl.: B23K 9/173, B23K 37/06

(54) **ELECTROGAS ARC WELDING METHOD AND ELECTROGAS ARC WELDING APPARATUS**

(30) Priority: 25.07.2014 JP 2014152266
(71) Applicant: Kabushiki Kaisha Kobe Seiko Sho (Kobe Steel, Ltd.), Kobe-shi, Hyogo 651-8585 (JP)
(72) Inventor: KIHATA, Shigeru, Fujisawa-shi, Kanagawa 251-8551 (JP); SAITO, Yasuyuki, Fujisawa-shi, Kanagawa 251-8551 (JP); TAKANASHI, Fujio, Fujisawa-shi, Kanagawa 251-8551 (JP); IZUTANI, Shun, Fujisawa-shi, Kanagawa 251-8551 (JP)
(74) Representative: Müller-Boré & Partner Patentanwälte PartG mbB
(86) International application number: PCT/JP2015/070680
(87) International publication number: WO 2016/013542

(57) **Abstract**

Provided are an electrogas arc welding method and an electrogas arc welding apparatus that can efficiently discharge slag.

A welding wire 5 in use is a flux-cored wire that has a flux filled in a steel outer sheath, and has the composition that contains C, Si, Mn, Mo, Ti, and SiO₂ in specific amounts, and Al, S, P, TiO₂, and Al₂O₃ in limited specific amounts or less, with the balance being Fe and inevitable impurities while satisfying the equation (A) below. The sliding copper shoe 2 has a trench at its surface in contact with a groove, the trench having a curvature. When a is a width of the groove, a trench width W is in a range of (1.1 × a) to (2.5 × a) mm; the trench depth D is in a range of 0.5 to 5.5 mm; and a ratio (W/D) of the trench width W to the trench depth D is in a range of 5. 0 to 80.0. An electrogas arc welding is performed with a feed speed of the welding wire 5 set constant by controlling a speed of raising a welding torch 4 based on welding current such that a protruding length of the welding wire 5 is set constant. $1.0 \leq \left(\left[{SiO}_{2}\right]+2.1\times \left[Si\right]\right) / \left(\left[{Al}_{2}{O}_{3}\right]+1.9\times \left[Al\right]+\left[{TiO}_{2}\right]+1.7\times \left[Ti\right]\right)$

## Description

### Technical Field

The present invention relates to an electrogas arc welding method and an electrogas arc welding apparatus. More specifically, the present invention relates to a slag discharge technique in electrogas arc welding.

### Background Art

In an electrogas arc welding method, for example, a water-cooled sliding shoe is placed on a surface (groove surface) side of a base metal, and a backing shoe is placed on its opposite surface. Then, a shielding gas, such as carbon dioxide, is supplied into a space enclosed by the base metal, the sliding shoe, and the backing shoe, and a welding wire is pulled through a welding torch, so that the arc welding is performed. A welding position is generally a vertical position in which welding is executed upward from the lower side.

The electrogas arc welding generally uses a flux-cored wire that has flux filled, as a welding material, into a steel outer sheath. The reason for the use of the flux-cored wire is that a slag former blended in the flux is melted during welding to keep the appearance of beads good. However, the flux-cored wire causes the slag former to be melted during welding, maintaining a large amount of molten slag directly on the molten metal. If the molten slag becomes thick directly on the molten metal, the wire might be embedded in the slag, thus destabilizing the arc and degrading the appearance of the beads. Furthermore, the thickened molten slag located directly on the molten metal leads to variations in components of the welded metal, causing problems of excessive strength and degradation in toughness.

For this reason, the conventional electrogas arc welding technique employs a method for forcibly discharging slag from a lower portion of the sliding shoe (see Patent Documents 1 to 4) . For example, in a welding method mentioned in Patent Document 1, to ensure the discharge of slag, a water-cooled sliding copper shoe in use is provided with a tapered portion that has its gap from the bead widened downward. Patent Document 2 proposes a sliding shoe that has, at a groove-side surface, trenches engraved in a welding travel direction, each trench having its width gradually decreasing from the surface of the shoe toward the inside thereof. The trenches serve to selectively suction slag thereinto from a molten pool including molten metal and the slag.

On the other hand, Patent Document 3 proposes a sliding shoe that includes: a surface facing a base metal in the form of curved concave portion; an opening formed near an upper end of the curved concave portion and adapted to supply shielding gas therefrom; sliding edge portions located on both left and right sides of the curved concave portion, each edge portion being made up of a flat vertical surface; and a cutout portion located under one of the edge portions to form a spacing with a predetermined width from the base metal surface. In the sliding shoe mentioned in Patent Document 3, molten slag retained on molten metal in a molten pool flows downward out of the space between the curved concave portion and the molten metal, and also flows out of the space formed between the cutout portion and the base metal surface toward the side of a track of the sliding shoe. Thus, the amount of discharge of the molten slag can be increased, compared with a conventional sliding shoe.

Furthermore, Patent Document 4 proposes a water-cooled sliding copper shoe that has a first trench for the formation of weld beads and a second trench for the discharge of molten slag. These trenches are arranged from the upper side to the lower side in the order in a surface of the sliding shoe facing a groove of the workpieces to be welded. In the sliding shoe mentioned in Patent Document 4, the first trench is formed in parallel with the surface of the workpiece to be welded, while the second trench is formed to be continued from a lower part of the first trench and inclined relative to the surface of the workpiece to be welded such that the width of the second trench is sequentially increased from the upper side to the lower side, and the depth of the second trench is sequentially increased from the upper side to the lower side.

### Prior Art Document

### Patent Document

Patent Document 1: JP H11-285826 A
Patent Document 2: JP 2007-90398 A
Patent Document 3: JP 2010-142814 A
Patent Document 4: JP 2012-166204 A

### Disclosure of the Invention

### Problems to be Solved by the Invention

However, the conventional techniques mentioned above have the following problems. When using the sliding shoe with the trench having its depth increased from the upper side toward the lower side, such as that mentioned in Patent Document 1, or the sliding shoe with the trench having its width and depth increased from the upper side toward the lower side, such as that mentioned in Patent Document 4, slag is excessively discharged depending on an arc voltage or the properties of the slag, causing weld defects, such as burn-through, slag inclusion, and pores.

The sliding shoe mentioned in Patent Document 2 is adapted to suction and discharge molten slag through the engraved trenches. For a slag composition having a low surface tension, the suction effect of the trenches cannot be obtained sufficiently, and after the repeated use of the shoe, the slag entrapped in the trenches is solidified, which causes a problem that the discharge effect of slag by the suction cannot be exhibited during welding. Furthermore, the sliding shoe mentioned in Patent Document 3 has a problem that not only the molten slag, but also the molten metal flows down into the cutout portion of the water-cooled sliding copper shoe, thus degrading the shape of the beads.

Accordingly, it is a main object of the present invention to provide an electrogas arc welding method and an electrogas arc welding apparatus that can efficiently discharge slag.

### Means for Solving the Problems

As mentioned above, the promotion of discharge of slag has been attempted by devising the structure of a water-cooled sliding copper shoe in the related art. However, the amount of discharge of slag changes depending on the arc stability and the slag composition in a welding wire, and thus cannot be controlled sufficiently only by the structure of the water-cooled sliding copper shoe. In particular, the composition of the welding wire affects the melting properties of slag and is also related to burn-through of welded metal, weld defects, and degraded shape of beads. Nevertheless, no optimal approach has been conventionally undertaken with regard to the slag properties of a welding wire and the shape of a water-cooled sliding copper shoe.

For this reason, the inventors have studied about a combination of weld materials determined by considering the slag composition and a welding apparatus therefor, and found an electrogas arc welding method that can maintain the efficient discharge of slag for a long period of time over repeated uses, and can prevent the occurrence of weld defects and the degradation in bead shape and toughness of welded metal, which consequently leads to the present invention.

That is, the electrogas arc welding method according to the present invention is an electrogas arc welding method that includes abutting a sliding copper shoe against a surface of a groove in a workpiece to be welded, and performing arc welding while raising the sliding copper shoe and a welding torch, wherein the welding wire in use is a flux-cored wire that has a flux filled in a steel outer sheath, the flux-cored wire including, relative to a total mass of the wire, C: 0.01 to 0.50% by mass, Si: 0.10 to 1.00% by mass, Mn: 0.50 to 4.00% by mass, Mo: 0.10 to 1.00% by mass, Ti: 0.05 to 0.40% by mass, and SiO₂: 0.10 to 1.00% by mass, the flux-cored wire further including, in respective limited amounts, A1: 0.30% or less by mass (including 0%), S: 0.050% or less by mass (including 0%), P: 0.050% or less by mass (including 0%), TiO₂: 0.30% or less by mass (including 0%), and Al₂O₃: 0.30% or less by mass (including 0%), with the balance being Fe and inevitable impurities, wherein the flux-cored wire has a composition that satisfies equation (A) below, wherein the sliding copper shoe has a trench at a surface thereof in contact with the groove, the trench having a curvature, wherein when a is a width of the groove, the trench width W is in a range of (1.1 × a) to (2.5 × a) mm, the trench depth D is in a range of 0.5 to 5.5 mm, and a ratio (W/D) of the trench width W to the trench depth D is in a range of 5.0 to 80.0, and wherein while a feed speed of the welding wire is set constant, a speed of raising the welding torch is controlled based on welding current such that a protruding length of the welding wire is set constant:
[Equation 1] $1.0 \leq \left(\left[{SiO}_{2}\right]+2.1\times \left[Si\right]\right) / \left(\left[{Al}_{2}{O}_{3}\right]+1.9\times \left[Al\right]+\left[{TiO}_{2}\right]+1.7\times \left[Ti\right]\right)$ where [SiO₂] is a SiO₂ content, [Si] is a Si content, [Al₂O₃] is an Al₂O₃ content, [Al] is an Al content, [TiO₂] is a TiO₂ content, and [Ti] is a Ti content.

The flux-cored wire may further include, relative to the total mass of the wire, Mg: 0.50% or less by mass, Ni: 2.0% or less by mass, Cr: 1.0% or less by mass, and B: 0.005% or less by mass.

The flux-cored wire can further include, relative to the total mass of the wire, 0.80% or less by mass in total of at least one kind of oxide selected from MgO, Li₂O, Na₂O, K₂O, CaO, SrO, and BaO.

Moreover, the flux-cored wire suitable for use can have a diameter of 1.5 to 3.5 mm while a flux filling rate is set in a range of 15 to 30% by mass.

On the other hand, in an electrogas arc welding method according to the present invention, the control of a speed of raising the welding torch may include the steps of: removing a high-frequency component from welding current detected by a low-pass filter; and comparing a welding current value passing through the low-pass filter with a welding current command value previously set, wherein a cutoff frequency of the low-pass filter may be set at 0.98 to 2.93 Hz.

The welding can be performed while periodically changing an arc voltage.

. An electrogas arc welding apparatus according to the present invention includes: a sliding copper shoe that is abutted against a surface of a groove in a workpiece to be welded; a welding torch adapted to feed a welding wire into the groove; a torch movement mechanism that moves the welding torch in a front-back direction, an up-down direction, and a right-left direction, with respect to a weld line; and a control unit adapted to control a speed of raising the welding torch based on welding current, wherein the sliding copper shoe has a trench at a surface thereof in contact with the groove, the trench having a curvature, and wherein when a is a width of the groove, the trench width W is in a range of (1.1 × a) to (2.5 × a) mm, the trench depth D is in a range of 0.5 to 5.5 mm, and a ratio (W/D) of the trench width W to the trench depth D is in a range of 5.0 to 80.0.

### Effects of the Invention

Accordingly, the present invention specifies the composition of the weld material in addition to the structure of the sliding copper shoe, thereby making it possible to efficiently discharge slag.

### Brief Description of the Drawings

Fig. 1 is a schematic cross-sectional view of an electrogas arc welding method according to an embodiment of the present invention.
Fig. 2 is a cross-sectional view showing the shape of a groove.
Fig. 3A is a schematic plan view showing the structure of a sliding copper shoe 2 shown in Fig. 1.
Fig. 3B is a cross-sectional view taken along the line Z-Z of Fig. 3A.
Fig. 4 is a block diagram showing a control method for setting a protruding length of a wire constant.
Fig. 5 is a diagram showing an example of the structure of a welding apparatus used in the electrogas arc welding method according to the embodiment.
Fig. 6 is a cross-sectional view showing a welding method in application to fillet welding.

### Mode for Carrying Out the Invention

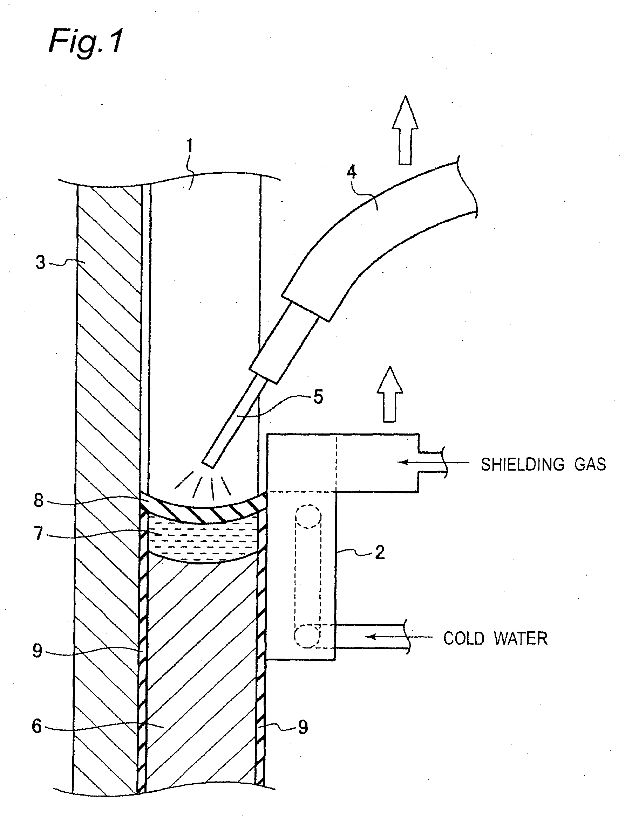

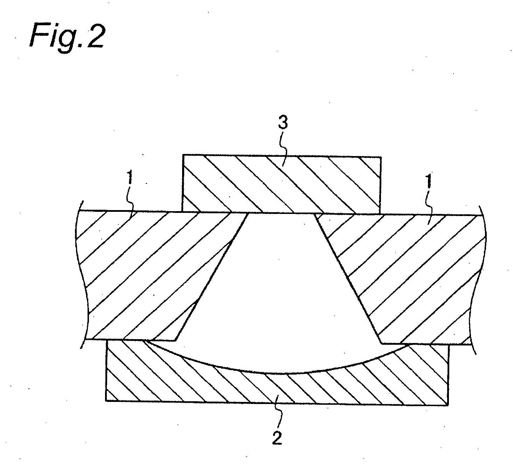

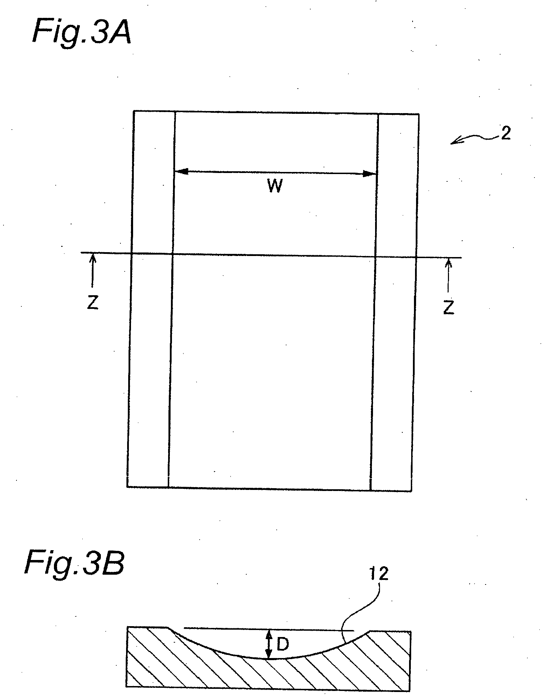

Embodiments for carrying out the present invention will be described in detail below. Note that the present invention is not intended to be limited by the following respective embodiments. Fig. 1 is a schematic cross-sectional view of an electrogas arc welding method in an embodiment of the present invention; and Fig. 2 is a cross-sectional view of the shape of a groove. Fig. 3A is a schematic plan view showing the structure of a sliding copper shoe 2 shown in Fig. 1; and Fig. 3B is a cross-sectional view taken along the line Z-Z of Fig. 3A.

As shown in Fig. 1, in the electrogas arc welding method of this embodiment, the sliding copper shoe 2 is butted against to one surface side of a groove formed in workpieces to be welded (base metals 1), while a backing material 3 is butted against the other surface side thereof. Here, the shape of the groove in use can be, for example, a V-groove as shown in Fig. 2. A welding wire 5 is fed from a welding torch 4 into the groove enclosed by the base metals 1, sliding copper shoe 2, and backing material 3, while supplying shielding gas, whereby the arc welding is performed while raising the welding torch 4 and the sliding copper shoe 2.

At this time, the welding wire 5 in use is a flux-cored wire that has a flux filled in a steel outer sheath, and contains C, Si, Mn, Mo, Ti, and SiO₂ in specific amounts, and Al, S, P, TiO₂, and Al₂O₃ in limited specific amounts or less, with the balance being Fe and inevitable impurities. The flux-cored wire has the composition that satisfies the following equation (A). In equation (A) below , [SiO₂] is a SiO₂ content, [Si] is a Si content, [Al₂O₃] is an Al₂O₃ content, [Al] is an Al content, [TiO₂] is a TiO₂ content, and [Ti] is a Ti content.

It is noted that in the present specification, the term "Si content" represented by [Si] means a Si content other than the content of Si in SiO₂. The content represented by [ ] is a content expressed in units of mass ratio.
[Equation 2] $1.0 \leq \left(\left[{SiO}_{2}\right]+2.1\times \left[Si\right]\right) / \left(\left[{Al}_{2}{O}_{2}\right]+1.9\times \left[Al\right]+\left[{TiO}_{2}\right]+1.7\times \left[Ti\right]\right)$

As shown in Figs. 3A and 3B, the sliding copper shoe 2 in use has, at its surface in contact with the groove, a trench 12 with a curvature. Furthermore, when a is the width of the groove, the trench width W is in a range of (1.1 × a) to (2.5 × a) mm; the trench depth D is in a range of 0.5 to 5.5 mm; and a ratio (W/D) of the trench width W to the trench depth D is in a range of 5.0 to 80.0. Moreover, during welding, a feed speed of the welding wire 5 is set constant, and a speed of raising the welding torch is controlled based on welding current.

The reasons for setting various conditions in the electrogas arc welding method in this embodiment will be described below.

### [Welding Wire 5]

The welding wire 5 used in the electrogas arc welding method in this embodiment is a flux-cored wire that includes a cylindrical steel outer sheath and a flux filled in the outer sheath. The form of the flux-cored wire may be of either a seamless type with no seam formed on the outer sheath or a seam type with a seam formed on the outer sheath. The flux-cored wire can include one with or without a surface (outer surface of the outer sheath) subjected to copper plating. In the electrogas arc welding method of this embodiment, both types of wires can be used.

A description will be given of the reasons for limiting the contents of the respective chemical components of the flux-cored wire used in the electrogas arc welding method according to this embodiment. Note that the respective contents of the components mentioned below indicate the ratio of the component relative to the total mass of the wire including a combination of the outer sheath and the flux.

### <C: 0.01 to 0.50% by mass>

Carbon (C) has the effect of enhancing the strength of welded metal. However, when the C content in the welding wire is less than 0.01% by mass, the strength of the welded metal becomes insufficient. On the other hand, when a large amount of C, exceeding 0.50% by mass, is contained in the welding wire, C binds with oxygen during welding to produce CO gas, which generates bubbles on the surface of a droplet of the weld metal. Such bubbles fly apart to make the arc unstable, producing spatter. Thus, the C content in the welding wire is set at 0.01 to 0.50% by mass.

### <Si: 0.10 to 1.00% by mass>

Silicon (Si) is an element having the deoxidizing effect and essential to ensure the strength and toughness of welded metal. However, when the C content in the welding wire is less than 0.10% by mass, the deoxidation becomes insufficient, thus generating blowholes in the welded metal. On the other hand, when a large amount of Si, exceeding 1.00% by mass, is contained in the welding wire, a molten slag 8 retained on a molten metal 7 is made thicker during welding. The welding wire 5 is embedded in the molten slag 8, leading to variations in the yield of welded metal 9, thus degrading the toughness thereof. Thus, the Si content in the welding wire is set at 0.10 to 1.00% by mass.

It is noted that in the present specification, the term "Si content in the welding wire" means a Si content other than the content of Si in SiO₂. This is because the SiO₂ content is defined aside from the Si content mentioned above.

### <Mn: 0.50 to 4.00% by mass>

Manganese (Mn), like Si mentioned above, serves as a deoxidant or a sulfur scavenger and thus is an element essential to ensure the strength and toughness of welded metal. However, when the Mn content in the welding wire is less than 0.50% by mass, the deoxidation becomes insufficient, thus generating welding defects (blowholes) in the welded metal, or resulting in insufficient toughness of the welded metal. On the other hand, when a large amount of Mn, exceeding 4.00% by mass, is contained in the welding wire, there occurs a large amount of slag that is difficult to peel off during the welding, causign welding defects, such as slag inclusion, and the strength of the welded metal becomes excessively high, resulting in significantly reduced toughness. Thus, the Mn content in the welding wire is set at 0.50 to 4.00% by mass.

### <Mo: 0.10 to 1.00% by mass>

Molybdenum (Mo) is an element essential to ensure the strength and toughness of welded metal. However, when the Mo content in the welding wire is less than 0.10% by mass, the strength or toughness of the welded metal becomes insufficient. On the other hand, when the Mo content in the welding wire exceeds 1.00% by mass, the strength of the welded metal becomes extremely high, causing weld defects, such as cracking. Thus, the Mo content in the welding wire is set at 0.10 to 1.00% by mass.

### <Ti: 0.05 to 0.40% by mass>

Titanium (Ti) has the effect of refining ferrite grains in welded metal to improve the toughness thereof. However, when the Ti content in the welding wire is less than 0.05% by mass, the toughness of the welded metal becomes insufficient. On the other hand, Ti is a strongly deoxidizing element. When the Ti content in the welding wire exceeds 0.40% by mass, the generation of TiO₂ slag having high viscosity occurs excessively. Consequently, the discharge of slag is suppressed, leading to the thickened molten slag 8 retained on the molten metal 7, so that the welding wire 5 is embedded in the molten slag 8, leading to variations in the yield of welded metal 9, thus degrading the toughness thereof. Thus, the Ti content in the welding wire is set at 0.05 to 0.40% by mass.

### <SiO₂: 0.10 to 1.00% by mass>

Silicon dioxide (SiO₂) is an oxide contained in the flux to form molten slag having relatively good fluidity. The addition of MgO or CaO, to be mentioned later, together with SiO₂ makes the fluidity of the molten slag better. Thus, in the electrogas arc welding, the slag composition is specified to mainly contain SiO₂, which promotes the discharge of slag. The slag composition mainly containing SiO₂, which is glassy, is more likely to be peeled off and tends to spread across the entire surface of a bead, resulting in the good appearance of the bead. To form the slag composition mainly containing SiO₂. in this way, SiO₂ needs to be contained in 0.10% or more by mass in the welding wire.

On the other hand, when the SiO₂ content in the welding wire exceeds 1.00% by mass, the amount of slag becomes excessive, and consequently the formation of oxides is promoted, compared to the discharge effect of slag. Thus, the molten slag 8 retained on the molten metal 7 is made thicker, causing the welding wire 5 to be embedded in the molten slag 8, leading to variations in the yield of welded metal 9, thus degrading the toughness thereof. Thus, the SiO₂ content in the welding wire is set at 0.10 to 1.00% by mass. In terms of improving the slag discharge efficiency, the SiO₂ content in the welding wire is preferably set at 0.20 to 0.60% by mass.

### <Al: 0.30% or less by mass>

Aluminum (Al) has the effect of refining ferrite grains in the welded metal to improve the toughness thereof, like Ti mentioned above. Ti demonstrates the highest effect of refining the ferrite grains. An Al oxide has high viscosity, degrading the slag removability, thus affecting the appearance of a bead. Thus, preferably, Al is little added to the welding wire when possible. The Al content is more preferably 0% by mass.

On the other hand, Al is a strongly deoxidizing element. When the Al content in the welding wire exceeds 0.30% by mass, the generation of slag excessively occurs. Consequently, the discharge of slag is suppressed, making the molten slag 8 on the molten metal 7 thicker, so that the welding wire 5 is embedded in the molten slag 8, leading to variations in the yield of welded metal 9, thus degrading the toughness thereof. Thus, the Al content in the welding wire is limited to 0.30% or less by mass.

### <S: 0.050% or less by mass; P: 0.050% or less by mass>

Both sulfur (S) and phosphor (P) are inevitable impurities. When the content of each of these elements in the welding wire exceeds 0.050% by mass, weld defects, such as cracking, occur in the welded metal. Therefore, each of the S content and the P content is limited to 0.050% or less by mass. Note that the S content and P content in the welding wire are preferably little when possible, and more preferably 0% by mass. However, when each of the S content and P content is 0.050% or less by mass, the effects of the present invention are not affected at all.

### <TiO₂: 0.30% or less by mass; Al₂O₃: 0.30% or less by mass>

TiO₂ and Al₂O₃ are oxides contained in flux. Because these form molten slag having high viscosity, the contents of these compounds are preferably little when possible, and more preferably 0% by mass. In particular, when the content of each of TiO₂ and Al₂O₃ in the welding wire exceeds 0.30% by mass, the discharge of slag is suppressed, thus degrading the toughness of welded metal, causing welding defects, such as slag inclusion. Thus, each of the TiO₂ content and the Al₂O₃ content is limited to 0.30% or less by mass.

### < (SiO₂ + 2.1Si) / (Al₂O₃ + 1.9Al + TiO₂ + 1.7Ti) >

As mentioned above, TiO₂ and Al₂O₃ derived from the flux and Ti and Al serving as the strongly deoxidizing element suppress the discharge of slag. For this reason, when ([SiO₂] + 2.1 × [Si]) / ([Al₂O₃] + 1.9 × [Al] + [TiO₂] + 1.7 × [Ti]) is less than 1.0, that is, when the contents of these components in the welding wire do not satisfy the above-mentioned equation (A), the obtained slag has the composition mainly containing TiO₂ and Al₂O₃, degrading the toughness of the welded metal, causing the occurrence of weld defects.

In contrast, when ( [SiO₂] + 2.1 × [Si] ) / ( [Al₂O₃] + 1. 9 × [Al] + [TiO₂] + 1.7 × [Ti]) is 1.0 or more, that is, when the contents of these components in the welding wire satisfy the above-mentioned equation (A), the obtained slag has the composition mainly containing SiO₂, promoting the discharge of the slag, resulting in good appearance of the bead with no weld defects. Note that the coefficients of Si, Al, and Ti in the above-mentioned equation (A) are the molar mass ratios between elements and their oxides. These coefficients are defined, provided additional elements are all oxides.

### <Mg: 0.50% or less by mass>

Magnesium (Mg) is a strongly deoxidizing element, and has the effect of reducing the amount of oxygen in welded metal to improve the toughness of the welded metal. Mg can be added to a welding wire as needed. Note that in terms of improving the toughness of the welded metal, when adding Mg to the welding wire, the Mg content is preferably 0.05% or more by mass.

On the other hand, Mg is a strongly deoxidizing element. When the Mg content in the welding wire exceeds 0.50% by mass, MgO slag is generated excessively. The appropriate content of MgO binds with SiO₂ to produce molten slag with good fluidity. Any excessive MgO content generates a great amount of slag that would be difficult to peel during welding, causing weld defects, such as slag inclusion. Thus, when adding Mg to the welding wire, the Mg content is set at 0.50% or less by mass.

### <Ni: 2.0% or less by mass, Cr: 1.0% or less by mass, and B: 0.005% or less by mass>

The flux-cored wire used for the welding wire may contain Ni, Cr, and B to improve the strength or toughness of the welded metal. Note that when the added contents of these elements are excessively large, the welded metal is more likely to cause cracking. Specifically, when the content of Ni added to the welding wire exceeds 2.0% by mass, when the content of Cr added thereto exceeds 1.0% by mass, or when the content of B added thereto exceeds 0.005% by mass, cracking is more likely to occur in the welded metal. Therefore, the addition of Ni, Cr, and B are performed to satisfy the following contents: Ni: 2.0% or less by mass, Cr: 1.0% or less by mass, and B: 0.005% or less by mass, respectively.

### <MgO, Li₂O, Na₂O, K₂O, CaO, SrO, and BaO: 0.80% or less by mass in total>

MgO, Li₂O, Na₂O, K₂O, CaO; SrO, and BaO have the effect of being melted together with SiO₂ to reduce the viscosity of slag, thereby improving the fluidity of the slag. Note that when the total content of MgO, Li₂O, Na₂O, K₂O, CaO, SrO, and BaO exceeds 0.80% by mass, the amount of slag becomes excessive, and the formation of oxide is promoted, compared to the effect of discharge of the slag. Consequently, the molten slag 8 retained on the molten metal 7 becomes thicker, so that the welding wire 5 is embedded in the molten slag 8, leading to variations in the yield of the welded metal 9, thus degrading the toughness thereof. Thus, when MgO, Li₂O, Na₂O, K₂O, CaO, SrO, and BaO are added to the welding wire, the total content of them is set at 0.80% or less by mass. Note that the welding wire may contain only one kind of these oxides, or two or more kinds of these oxides.

### <Remainder: Fe and inevitable impurities>

The balance in the chemical composition of the welding wire (flux-cored wire) used in the electrogas arc welding method of this embodiment includes Fe and inevitable impurities.

### <Diameter: 1.5 to 3.5 mm>

The diameter of the flux-cored wire used in the welding wire is preferably in a range of 1.5 to 3. 5 mm. When using a wire having a diameter of less than 1.5 mm in the electrogas arc welding, a weld quantity is increased to heighten the position of the molten metal, thereby supressing the discharge of slag. On the other hand, when using a wire having a diameter of more than 3.5 mm, welding current becomes higher, leading to a high heat input, thus making it more likely to degrade the toughness of the obtained welded metal.

### <Flux Filling Rate: 15 to 30% by mass>

In the flux-cored wire used for the welding wire, a flux filling rate is preferably in a range of 15 to 30% by mass. The use of a wire having a flux filling rate of less than 15% by mass cannot achieve the effect of enhancing the weld quantity, making it more likely for the wire to be embedded in a slag bath. On the other hand, the use of a wire having a flux filling rate exceeding 30% by mass enhances the Joule heat effect to destabilize the movement of a droplet of the weld metal, making it difficult to control the protrusion of the wire. Here, the term "flux filling rate" as used herein is defined as the ratio of the mass of the flux filled in the outer sheath to the mass of the entire wire (the total of the outer sheath and flux).

### <Outer Sheath>

Material for the outer sheath of the flux-cored wire used in the welding wire may be either soft steel or stainless steel as long as the composition of the entire wire falls within the range mentioned above.

### <Manufacturing Method>

A manufacturing method for the welding wire (flux-cored wire) used for the electrogas arc welding method in this embodiment is not specifically limited. The electrogas arc welding method in this embodiment can use any welding wire that is manufactured by the general manufacturing method. For example, a flux is filled into a U-shaped outer sheath made of soft steel or stainless steel, which is then formed into a cylindrical shape, followed by drawing to attain a target diameter, thus enabling production of the welding wire.

### [Sliding Copper Shoe 2]

The sliding copper shoe 2 used for the electro arc welding in this embodiment has, at its surface in contact with the groove, the trench 12 having a curvature. The shape of the trench in the sliding copper shoe 2 depends on the discharge of molten slag. When the trench width W and trench depth D are large, the discharge of the slag is promoted, causing weld defects, such as defective bead shape and slag inclusion, due to burn-through of molten metal and uneven coating of the bead in the presence of the slag.

On the other hand, when the trench width W and trench depth D are small, the discharge of slag is suppressed, making the molten slag 8 retained on the molten metal 7 thicker. Thus, the welding wire 5 is embedded in the molten slag 8, leading to variations in the yield of welded metal 9, thereby degrading the toughness thereof. To uniformly cover the bead with the slag to prevent the defective bead shape and the occurrence of weld defects, the trench should not be set extremely large.

On the other hand, when the shape of the trench is made small, slag is difficult to discharge. For this reason, in the electro arc welding method of this embodiment, the use of the welding wire (flux-cored wire) with the above-mentioned composition forms molten slag that mainly contains SiO₂. The molten slag mainly containing SiO₂ has melting properties, including low viscosity, good fluidity, and excellent wettability to a copper shoe, which makes it possible to uniformly cover the bead with this slag without the necessity of excessive formation of a trench, thus enabling the formation of the good shape of the bead.

The shape of the trench that is suitable for combining with the flux-cored wire having the above-mentioned composition is specified as follows: when a is a width of the groove, a trench width W is in a range of (1.1 × a) to (2.5 × a) mem; the trench depth D is in a range of 0.5 to 5.5 mm; and a ratio (W/D) of the trench width W to the trench depth D is in a range of 5.0 to 80.0.

### <Trench Width W: (1.1 × a) to (2.5 × a) mm>

The trench width W depends on the groove width a. When the trench width W is less than 1. 1 times as large as the groove width a, the bead shape becomes defective, while when the trench width W is more than 2.5 times as large as the groove width a, burn-through of the welded metal or defective bead shape occurs. Therefore, the trench width W is set to 1.1 to 2.5 times as large as the groove width a.

### <Trench Depth D: 0.5 to 5.5 mm>

When the trench depth D is less than 0.5 mm, the yield of welded metal varies, degrading the toughness of the welded metal. When the trench depth D exceeds 5.5 mm, the slag cannot be placed uniformly on the bead, causing weld defects, such as a defective bead shape and slag inclusion. Thus, the trench depth D is set in a range of 0.5 to 5.5 mm.

### <Ratio (W/D) of Trench Width W to Trench Depth D: 5.0 to 80.0>

When the ratio (W/D) of the trench width W to the trench depth D is less than 5.0, even in the use of the flux-cored wire with the above-mentioned composition, the discharge of slag is interrupted, leading to variations in the yield of the welded metal, degrading the toughness of the welded metal. On the other hand, when the ratio (W/D) of the trench width W to the trench depth D exceeds 80.0, weld defects, such as defective bead shape and slag inclusion, occur. Thus, the ratio (W/D) of the trench width W to the trench depth D is set in a range of 5.0 to 80.0.

### <Trench Shape>

The shape of the trench 12 in the sliding copper shoe 2 has a curvature. With this arrangement, a good bead shape can be maintained. The curvature radius of the trench 12 is not particularly limited, but preferably in a range of 30 to 180 mm. In this way, the bead is covered uniformly with the slag, further enabling the improvement of the bead shape.

### [Control of Protruding Length of Welding Wire 5]

A protruding length of the welding wire 5 is preferably set in a range of 20 to 60 mm during welding. In the electrogas arc welding, when the protruding length of the welding wire 5 is less than 20 mm, the welding current becomes higher to cause a high heat input, thus degrading the toughness of the welded metal. On the other hand, when the protruding length of the welding wire 5 exceeds 60 mm, the Joule heat effect is demonstrated significantly, which unstabilizes the movement of a droplet of the weld metal, making it difficult to control the protruding length of the wire constant, as mentioned later.

In the electrogas arc welding of this embodiment, the welding is performed while controlling the speed of raising the welding torch in such a manner as to set the protruding length 1 of the above-mentioned welding wire 5 constant. When the protruding length is set constant, arc becomes stable, so that the swing of the molten slag 8 can be reduced, resulting in a small change in the amount of discharge of the slag over time. Thus, the slag can be constantly discharged at the same rate. As a result, weld defects, such as the defective bead shape and slag inclusion, can be prevented.

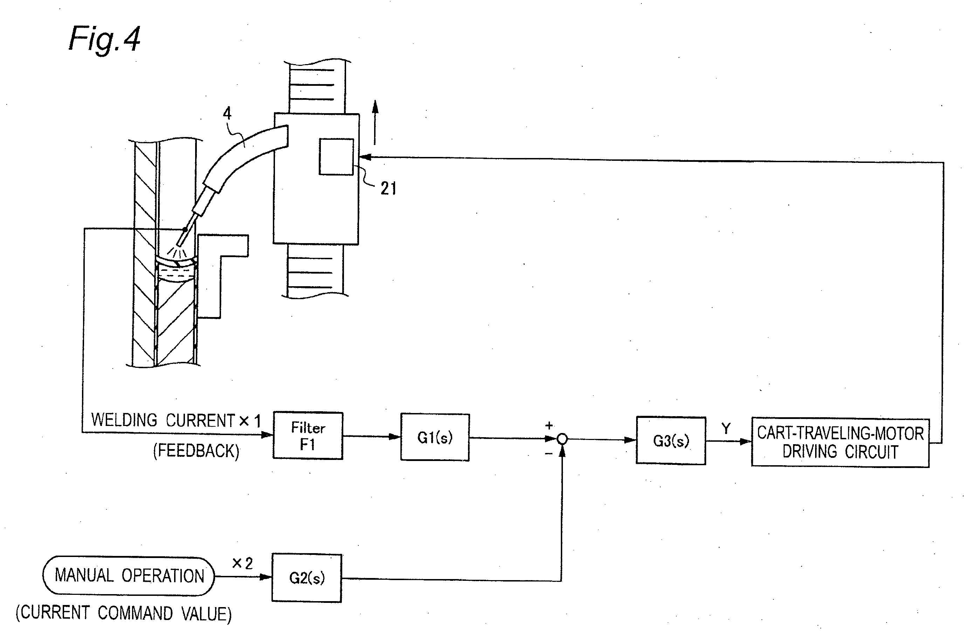

In particular, when using the welding wire that forms the molten slag with good flexibility, the swing of the molten slag 8 becomes larger. Because of this, it is essential to control the above-mentioned protruding length to be constant. A specific control method for setting the protruding length of the welding wire 5 constant will be described below. Fig. 4 is a block diagram showing the control method for setting the protruding length constant.

The shorter the protruding length of the welding wire 5, the larger the welding current becomes. In contrast, the longer the protruding length, the smaller the welding current becomes. Thus, in the electrogas arc welding of this embodiment, the welding current is detected, and the speed of raising the welding torch 5, i.e. welding speed is controlled based on the detected welding current. At this time, the feed speed of the welding wire 5 is not changed but set constant.

A method for controlling the speed of raising the welding torch based on the welding current is not particularly limited. For example, as shown in Fig. 4, the use of a low-pass filter F1 removes a high-frequency component to produce welding current X1, which is then input to a current detection value converter G1. Then, the current value from the current detection value converter G1 is compared with a current value obtained by reversing a welding current command value set by a manual operation X2, by means of a current setter G2. As a consequence, when the welding current value is larger than the welding current command value, the speed of raising the welding torch 4 is increased. On the other hand, when the welding current value is smaller than the welding current command value, the speed of raising the welding torch 4 is decreased.

The control of the speed of the welding torch 4 can be performed, for example, by executing computation by a cart-traveling-motor speed command computing unit G3, and automatically controlling a cart traveling motor 21 for moving the welding torch 4 through a cart-traveling-motor driving circuit 20. This control can set the protruding length of the welding wire 5 constant.

At this time, in terms of improving the accuracy of control of the protruding length of the welding wire 5, a cutoff frequency of a low-pass filter F1 is preferably set within a range of 0.98 to 2.93 Hz. When the cutoff frequency of the low-pass filter is less than 0.98 Hz, the sensitivity of control of the speed of raising the welding torch 4 is reduced, and thereby the welding torch 4 cannot follow a change in the protruding length of the welding wire 5 in some cases. When the cutoff frequency exceeds 2.93 Hz, the sensitivity of control of the speed of raising the welding torch 4 becomes so high that the speed of raising the welding torch changes with a slight change in the current to thereby change the protruding length of the welding wire 5, which makes the arc unstable. The unstable arc sometimes entrains the surrounding air to trap nitrogen into the welded metal, thus resulting in reduced toughness of the welded metal.

### [Structure of Welding Apparatus]

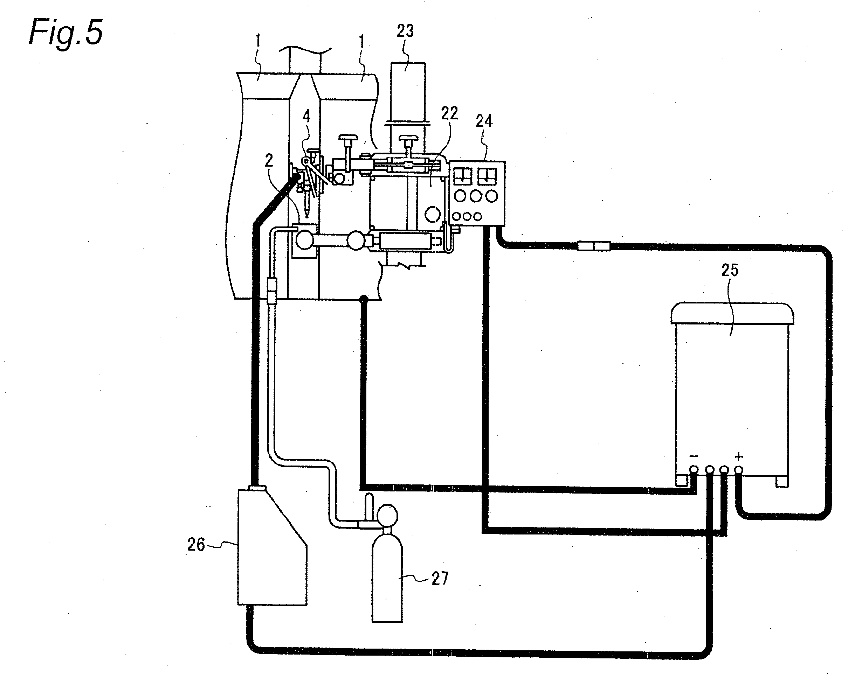

Fig. 5 is a diagram showing an example of the structure of a welding apparatus used in the electrogas arc welding method of this embodiment. The electrogas arc welding method in this embodiment can be performed by means of an electrogas arc welding apparatus that includes at least the sliding copper shoe 2 mentioned above, the welding torch 4, a torch movement mechanism, and a control unit. The electrogas arc welding apparatus generally includes a welding power supply 25, a wire feed device 26, and a shielding-gas supply mechanism.

The torch movement mechanism is adapted to move the welding torch 4 in the front-back direction, the up-down direction, and the right-left direction with respect to a weld line, and is configured of, for example, a cart 22 and a traveling rail 23. The detachable welding cart 22 has the welding torch 4 and the sliding copper shoe 2 attached thereto. The cart 22 is configured to move on the traveling rail 23 as a guide and to be capable of adjusting its position in the up-down, front-back, and right-left directions with respect to the weld line. Preferably, the welding cart 22 has a weight of 20 kg or less, and the width between guide rollers provided in the welding cart 22 and the width of the traveling rail 23 are relatively changed, thereby allowing the welding cart 22 to be easily detachable from a predetermined position on the traveling rail 23.

The control unit is to control the speed of raising the welding torch 4 based on the welding current such that the protruding length of the welding wire 5 is set constant. The control unit is disposed, for example, in an operation box 24. The operation box 24 is connected to the welding power supply 25 and controls a switch for starting and stopping welding, adjustment of welding current, adjustment of welding voltage, adjustment of the protruding length, adjustment of a traveling speed, wire inching, and the like.

### [Other Welding Conditions]

The thickness of a workpiece (base metal 1) to be welded is not particularly limited, and can be selected and used as appropriate, depending on the application or the like. Note that when the base metal 1 is a thick plate of more than 32 mm in thickness, welding may be done by oscillation of the welding torch 4. In that case, it is preferred that the welding apparatus includes a weaver-angle setting mechanism, a weaver rotation transfer driving mechanism capable of maintaining the set angle, a torch rotation transfer function for constantly holding an angle formed by the torch and welding cart at a given value, and a weaving operation transfer mechanism.

The characteristics of the power supply (welding power supply) used for welding are not particularly limited, and the power supply may be either a DC welding power supply or an AC power supply. Note that since the protruding length is controlled to be set constant, the used welding power supply preferably has constant-voltage characteristics. The kind and quality of the backing material 3 are not particularly limited. The backing material 3 may be, for example, a water-cooled copper shoe, ceramic material, or a steel material having a composition close to that of base material 1.

As the arc voltage becomes high, the arc pressure is applied to a wider region, which is effective in discharging slag. However, if the high arc voltage is maintained for a long period of time, the arc becomes unstable. Thus, in the electrogas arc welding method of this embodiment, to promote the discharge of slag, the arc voltage is preferably increased at any time intervals. The timing of increasing the arc voltage may be either at certain time intervals or at random times. When the arc voltage is changed periodically, like a pulse, its waveform is not particularly limited, and thus the arc voltage can take various pulse waveforms, including a rectangular shape, a triangle shape, and a wave shape. Furthermore, a pulse frequency range is also not particularly limited, but preferably a range of 0.1 to 500 Hz, which can efficiently discharge slag.

Shielding gases in use can include, in addition to 100 volume % CO₂ and 100 volume % Ar, a mixed gas of Ar and CO₂ or O₂. Among these shielding gases, 100 volume % CO₂ is preferable because of its significant penetration effect. Note that in view of preventing a defective state of the shielding gas, the flow rate of shielding gas is preferably set at 15 to 40 L/minute.

### [Joint Shape]

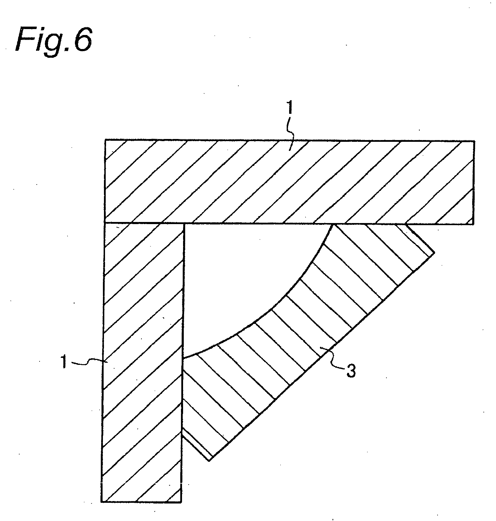

The electrogas arc welding in the present invention can also be applied to fillet welding, in addition to when the shape of the base metal 1 has the V groove mentioned above. Fig. 6 is a cross-sectional view showing a welding method in application to the fillet welding. As illustrated in Fig. 6, a backing material is not required in the fillet welding. The sliding copper shoe 2 is abutted against the surface of the base metal 1, and the welding wire is fed from the welding torch into the groove enclosed by the base metal 1 and sliding copper shoe 2 while supplying the shielding gas, whereby arc welding needs only to be performed while raising the welding torch and sliding copper shoe. Other conditions are the same as those for the V groove.

As mentioned in detail above, the electrogas arc welding method in this embodiment uses the flux-cored wire capable of forming molten slag having the properties that are the most effective in discharging the molten slag, as well as the sliding shoe having a specific trench shape. In this welding method, welding is performed while controlling the welding wire to keep the protruding length thereof constant. Thus, the electrogas arc welding method in this embodiment can maintain the efficient discharge of slag for a long period of time over repeated uses. Consequently, this embodiment can prevent the occurrence of weld defects, the degradation in bead shape, and the reduction in the toughness of welded metal.

The electrogas arc welding method in this embodiment can use the flux-cored wire containing specific respective amounts of Mg, Ni, Cr, and B to further improve the toughness of the welded metal. Further, when using the flux-cored wire that contains at least one kind of oxide selected from MgO, Li₂O, Na₂O, K₂O, CaO, SrO, and BaO, such an oxide binds with SiO₂ to reduce the viscosity of the molten slag, which can further promote the discharge of molten slag retained on the molten metal.

### Examples

The effects of the present invention will be specifically described below by way of Examples of the present invention and Comparative Examples. In Examples, flux-cored wires W1 to W70 shown in Tables 1 to 4 below and sliding copper shoes shown in Tables 3 and 4 below were used. The feed speed of each welding wire was set constant. The electrogas arc welding was executed while adjusting the speed of raising the welding torch so as to keep the protruding length of the welding wire constant based on corresponding welding current. Note that the balance in the chemical composition of the flux-cored wires shown in Tables 1 and 2 below included Fe and inevitable impurities. Furthermore, mark "-" in Tables 1 and 2 below indicate no positive addition, but these components could be contained as inevitable impurities.

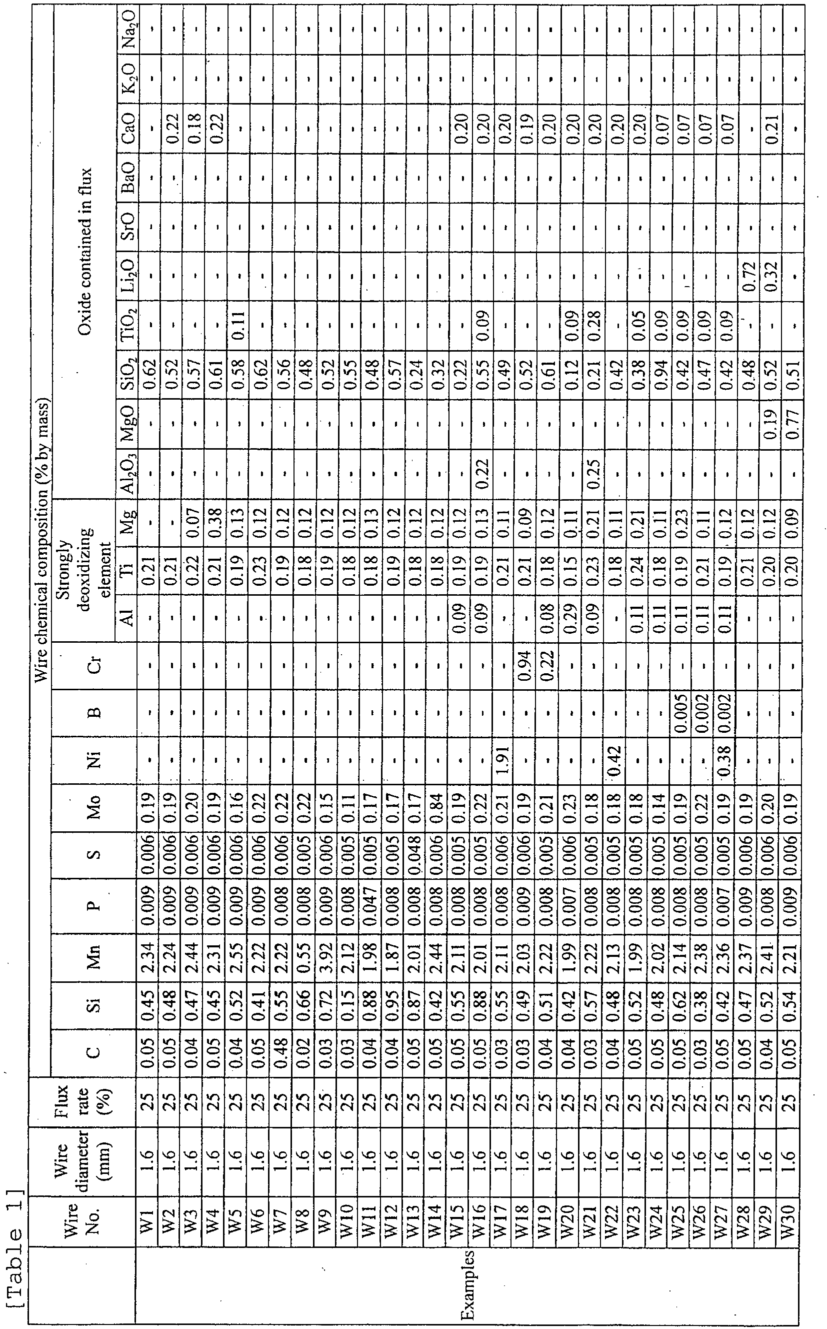

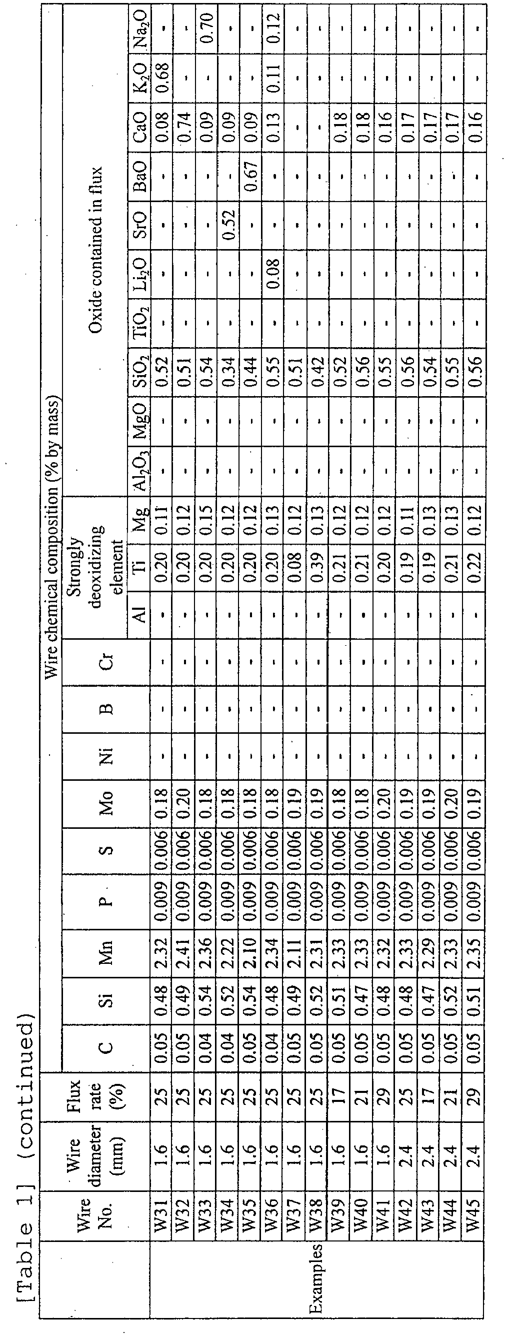

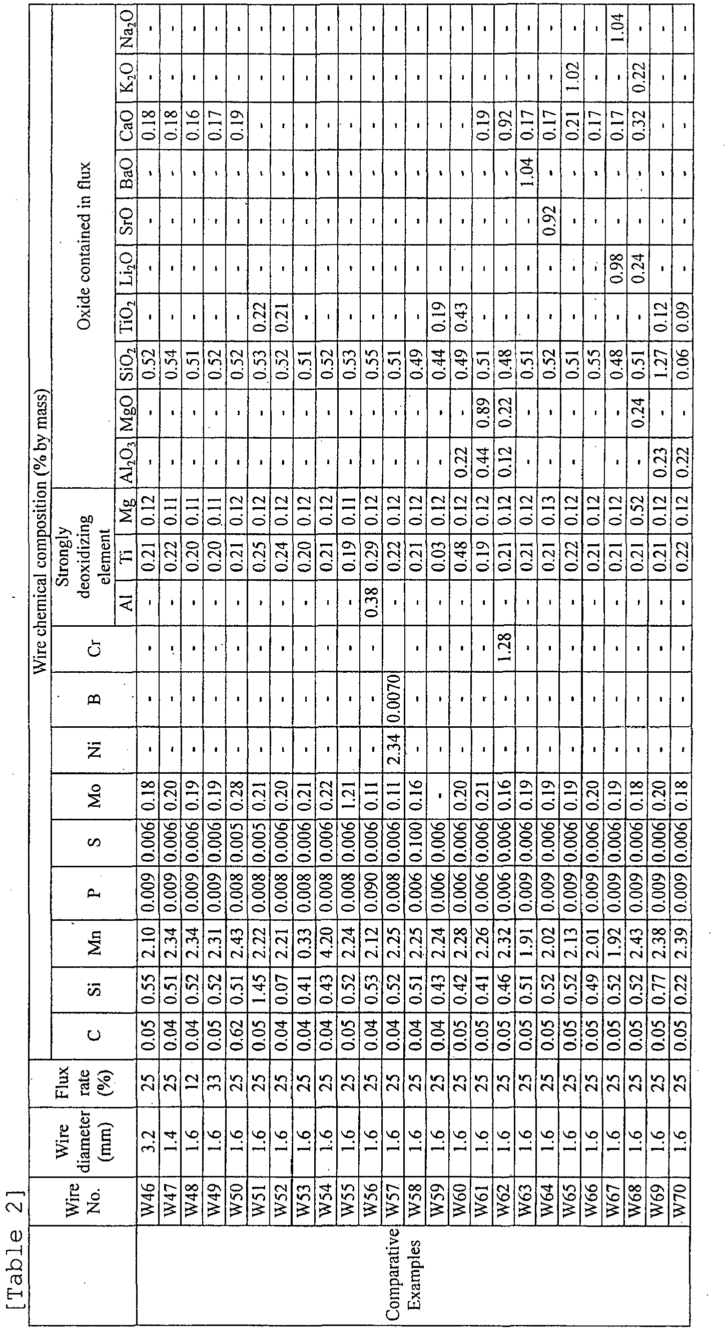

**[Table 3]**

| No. | Welding wire | | Water-cooled copper plate | | | | Protrusion control | | Protrusion amount (mm) | Groove width (mm) | Arc voltage pulse |
|---|---|---|---|---|---|---|---|---|---|---|---|
| | Wire No. | (SO₂+2.1Si)/ (Al₂O₃+1.9Al+TiO₂+1.7Ti) | Trench width (mm) | Trench width/Groove width (mm) | Trench depth (mm) | W/D | Presence of control | Cutoff frequency (Hz) | | | |
| 1 | W1 | 4.4 | 28 | 1.4 | 2 | 14.0 | Yes | 1.90 | 40 | 20 | - |
| 2 | W2 | 4.3 | 28 | 1.4 | 2 | 14.0 | Yes | 1.90 | 40 | 20 | - |
| 3 | W1 | 4.4 | 24 | 1.2 | 2 | 12.0 | Yes | 1.90 | 40 | 20 | - |
| 4 | W2 | 4.3 | 24 | 1.2 | 2 | 12.0 | Yes | 1.90 | 40 | 20 | - |
| 5 | W1 | 4.4 | 28 | 1.4 | 1 | 28.0 | Yes | 1.90 | 40 | 20 | - |
| 6 | W2 | 4.3 | 28 | 1.4 | 1 | 28.0 | Yes | 1.90 | 40 | 20 | - |
| 7 | W1 | 4.4 | 36 | 1.8 | 0.5 | 72.0 | Yes | 1.90 | 40 | 20 | - |
| 8 | W2 | 4.3 | 36 | 1.8 | 0.5 | 72.0 | Yes | 1.90 | 40 | 20 | - |
| 9 | W1 | 4.4 | 28 | 1.4 | 5 | 5.6 | Yes | 1.90 | 40 | 20 | - |
| 10 | W2 | 4.3 | 28 | 1.4 | 5 | 5.6 | Yes | 1.90 | 40 | 20 | - |
| 11 | W1 | 4.4 | 50 | 2.0 | 2 | 25.0 | Yes | 1.90 | 40 | 25 | - |
| 12 | W2 | 4.3 | 50 | 2.0 | 2 | 25.0 | Yes | 1.90 | 40 | 25 | - |
| 13 | W1 | 4.4 | 28 | 1.4 | 2 | 14.0 | Yes | 1.10 | 40 | 20 | - |
| 14 | W2 | 4.3 | 28 | 1.4 | 2 | 14.0 | Yes | 1.10 | 40 | 20 | - |
| 15 | W1 | 4.4 | 28 | 1.4 | 2 | 14.0 | Yes | 2.40 | 40 | 20 | - |
| 16 | W2 | 4.3 | 28 | 1.4 | 2 | 14.0 | Yes | 2.40 | 40 | 20 | - |
| 17 | W1 | 4.4 | 28 | 1.4 | 2 | 14.0 | Yes | 2:90 | 40 | 20 | - |
| 18 | W2 | 4.3 | 28 | 1.4 | 2 | 14.0 | Yes | 2.90 | 40 | 20 | - |
| 19 | W1 | 4.4 | 28 | 1.4 | 2 | 14.0 | Yes | 1.90 | 20 | 20 | - |
| 20 | W2 | 4.3 | 28 | 1.4 | 2 | 14.0 | Yes | 1.90 | 20 | 20 | - |
| 21 | W1 | 4.4 | 28 | 1.4 | 2 | 14.0 | Yes | 1.90 | 60 | 20 | - |
| 22 | W2 | 4.3 | 28 | 1.4 | 2 | 14.0 | Yes | 1.90 | 60 | 20 | - |
| 23 | W3 | 4.2 | 28 | 1.4 | 2 | 14.0 | Yes | 1.90 | 40 | 20 | - |
| 24 | W4 | 4.4 | 28 | 1.4 | 2 | 14.0 | Yes | 1.90 | 40 | 20 | - |
| 25 | W5 | 3.9 | 28 | 1.4 | 2 | 14.0 | Yes | 1.90 | 40 | 20 | - |
| 26 | W6 | 3.8 | 28 | 1.4 | 2 | 14.0 | Yes | 1.90 | 40 | 20 | - |
| 27 | W7 | 5.3 | 28 | 1.4 | 2 | 14.0 | Yes | 1.90 | 40 | 20 | - |
| 28 | W8 | 6.1 | 28 | 1.4 | 2 | 14.0 | Yes | 1.90 | 40 | 20 | - |
| 29 | W9 | 6.3 | 28 | 1.4 | 2 | 14.0 | Yes | 1.90 | 40 | 20 | - |
| 30 | W10 | 2.8 | 28 | 1.4 | 2 | 14.0 | Yes | 1.90 | 40 | 20 | - |
| 31 | W11 | 7.6 | 28 | 1.4 | 2 | 14.0 | Yes | 1.90 | 40 | 20 | - |
| 32 | W12 | 7.9 | 28 | 1.4 | 2 | 14.0 | Yes | 1.90 | 40 | 20 | - |
| 33 | W13 | 6.8 | 28 | 1.4 | 2 | 14.0 | Yes | 1.90 | 40 | 20 | - |
| 34 | W14 | 3.9 | 28 | 1.4 | 2 | 14.0 | Yes | 1.90 | 40 | 20 | - |
| 35 | W15 | 2.8 | 28 | 1.4 | 2 | 14.0 | Yes | 1.90 | 40 | 20 | - |
| 36 | W16 | 3.0 | 28 | 1.4 | 2 | 14.0 | Yes | 1.90 | 40 | 20 | - |
| 37 | W17 | 4.6 | 28 | 1.4 | 2 | 14.0 | Yes | 1.90 | 40 | 20 | - |
| 38 | W18 | 4.3 | 28 | 1.4 | 2 | 14.0 | Yes | 1.90 | 40 | 20 | - |
| 39 | W19 | 3.7 | 28 | 1.4 | 2 | 14.0 | Yes | 1.90 | 40 | 20 | - |
| 40 | W20 | 1.7 | 28 | 1.4 | 2 | 14.0 | Yes | 1.90 | 40 | 20 | - |
| 41 | W21 | 1.3 | 28 | 1.4 | 2 | 14.0 | Yes | 1.90 | 40 | 20 | - |
| 42 | W22 | 4.7 | 28 | 1.4 | 2 | 14.0 | Yes | 1.90 | 40 | 20 | - |
| 43 | W23 | 2.2 | 28 | 1.4 | 2 | 14.0 | Yes | 1.90 | 40 | 20 | - |
| 44 | W24 | 3.2 | 28 | 1.4 | 2 | 14.0 | Yes | 1.90 | 40 | 20 | - |
| 45 | W25 | 2.8 | 28 | 1.4 | 2 | 14.0 | Yes | 1.90 | 40 | 20 | - |
| 46 | W26 | 1.9 | 28 | 1.4 | 2 | 14.0 | Yes | 1.90 | 40 | 20 | - |
| 47 | W27 | 2.1 | 28 | 1.4 | 2 | 14.0 | Yes | 1.90 | 40 | 20 | - |
| 48 | W28 | 4.1 | 28 | 1.4 | 2 | 14.0 | Yes | 1.90 | 40 | 20 | - |
| 49 | W29 | 4.7 | 28 | 1.4 | 2 | 14.0 | Yes | 1.90 | 40 | 20 | - |
| 50 | W30 | 4.8 | 28 | 1.4 | 2 | 14.0 | Yes | 1.90 | 40 | 20 | - |
| 51 | W31 | 4.5 | 28 | 1.4 | 2 | 14.0 | Yes | 1.90 | 40 | 20 | - |
| 52 | W32 | 4.5 | 28 | 1.4 | 2 | 14.0 | Yes | 1.90 | 40 | 20 | - |
| 53 | W33 | 4.9 | 28 | 1.4 | 2 | 14.0 | Yes | 1.90 | 40 | 20 | - |
| 54 | W34 | 4.2 | 28 | 1.4 | 2 | 14.0 | Yes | 1.90 | 40 | 20 | - |
| 55 | W35 | 4.6 | 28 | 1.4 | 2 | 14.0 | Yes | 1.90 | 40 | 20 | - |
| 56 | W36 | 4.6 | 28 | 1.4 | 2 | 14.0 | Yes | 1.90 | 40 | 20 | - |
| 57 | W37 | 11.3 | 28 | 1.4 | 2 | 14.0 | Yes | 1.90 | 40 | 20 | - |
| 58 | W38 | 2.3 | 28 | 1.4 | 2 | 14.0 | Yes | 1.90 | 40 | 20 | - |
| 59 | W39 | 4.5 | 28 | 1.4 | 2 | 14.0 | Yes | 1.90 | 40 | 20 | - |
| 60 | W40 | 4.3 | 28 | 1.4 | 2 | 14.0 | Yes | 1.90 | 40 | 20 | - |

**[Table 4]**

| No. | Welding wire | | Water-cooled copper plate | | | | Protrusion control | | Protrusion amount (mm) | Groove width (mm) | Arc voltage pulse |
|---|---|---|---|---|---|---|---|---|---|---|---|
| | Wire No. | (SO₂+2.1Si)/ (Al₂O₃+1.9Al+TiO₂+1.7Ti) | Trench width (mm) | Trench width/Groove width (mm) | Trench depth (mm) | W/D | Presence of control | Cutoff frequency (Hz) | | | |
| 61 | W41 | 4.6 | 28 | 1.4 | 2 | 14.0 | Yes | 1.90 | 40 | 20 | - |
| 62 | W42 | 4.9 | 28 | 1.4 | 2 | 14.0 | Yes | 1.90 | 40 | 20 | - |
| 63 | W43 | 4.7 | 28 | 1.4 | 2 | 14.0 | Yes | 1.90 | 40 | 20 | - |
| 64 | W44 | 4.6 | 28 | 1.4 | 2 | 14.0 | Yes | 1.90 | 40 | 20 | - |
| 65 | W45 | 4.4 | 28 | 1.4 | 2 | 14.0 | Yes | 1.90 | 40 | 20 | - |
| 66 | W1 | 4.4 | 28 | 1.4 | 2 | 14.0 | Yes | 1.90 | 40 | 20 | Yes (0.1 Hz) |
| 67 | W2 | 4.3 | 28 | 1.8 | 2 | 14.0 | Yes | 1.90 | 40 | 20 | Yes (0.1 Hz) |
| 68 | W1 | 4.4 | 28 | 1.8 | 2 | 14.0 | Yes | 1.90 | 40 | 20 | Yes (50 Hz) |
| 69 | W2 | 4.3 | 28 | 1.4 | 2 | 14.0 | Yes | 1.90 | 40 | 20 | Yes (50 Hz) |
| 70 | W1 | 4.4 | 28 | 1.4 | 2 | 14.0 | Yes | 1.90 | 40 | 20 | Yes (500 Hz) |
| 71 | W2 | 4.3 | 28 | 1.4 | 2 | 14.0 | Yes | 1.90 | 40 | 20 | Yes (500 Hz) |
| 72 | W1 | 4.4 | 28 | 1.4 | 2 | 14.0 | Yes | 1.90 | 40 | 20 | Yes (600 Hz) |
| 73 | W2 | 4.3 | 28 | 1.4 | 2 | 14.0 | Yes | 1.90 | 40 | 20 | Yes (600 Hz) |
| 74 | W53 | 4.0 | 29 | 1.5 | 3 | 9.7 | Yes | 0.70 | 40 | 20 | - |
| 75 | W53 | 4.0 | 30 | 1.5 | 4 | 7.5 | Yes | 3.50 | 40 | 20 | - |
| 76 | W1 | 4.4 | 28 | 1.4 | 0.2 | 140.0 | Yes | 1.90 | 40 | 20 | - |
| 77 | W2 | 4.3 | 28 | 1.4 | 0.2 | 140.0 | Yes | 1.90 | 40 | 20 | - |
| 78 | W1 | 4.4 | 28 | 1.4 | 6 | 4.7 | Yes | 1.90 | 40 | 20 | - |
| 79 | W2 | 4.3 | 28 | 1.4 | 6 | 4.7 | Yes | 1.90 | 40 | 20 | - |
| 80 | W1 | 4.4 | 50 | 2.0 | 0.2 | 250.0 | Yes | 1.90 | 40 | 25 | - |
| 81 | W2 | 4.3 | 50 | 2.0 | 0.2 | 250.0 | Yes | 1.90 | 40 | 25 | - |
| 82 | W1 | 4.4 | 50 | 2.0 | 6 | 8:3 | Yes | 1.90 | 40 | 25 | - |
| 83 | W2 | 4.3 | 50 | 2.0 | 6 | 8.3 | Yes | 1.90 | 40 | 25 | - |
| 84 | W1 | 4.4 | 50 | 2.0 | 8 | 6.3 | Yes | 1.90 | 40 | 25 | - |
| 85 | W2 | 4.3 | 50 | 2.0 | 8 | 6.3 | Yes | 1.90 | 40 | 25 | - |
| 86 | W1 | 4.4 | 24 | 1.0 | 2 | 12.0 | Yes | 1.90 | 40 | 23 | - |
| 87 | W2 | 4.3 | 24 | 1.0 | 2 | 12.0 | Yes | 1.90 | 40 | 23 | - |
| 88 | W1 | 4.4 | 50 | 2.8 | 2 | 25.0 | Yes | 1.90 | 40 | 18 | - |
| 89 | W2 | 4.3 | 50 | 2.8 | 2 | 25.0 | Yes | 1.90 | 40 | 18 | - |
| 90 | W1 | 4.4 | 28 | 1.4 | 2 | 14.0 | No | - | 40 | 20 | - |
| 91 | W2 | 4.3 | 28 | 1.4 | 2 | 14.0 | No. | - | 40 | 20 | - |
| 92 | W1 | 4.4 | 28 | 1.4 | 5 | 5.6 | No | - | 40 | 20 | - |
| 93 | W2 | 4.3 | 28 | 1.4 | 5 | 5.6 | No | - | 40 | 20 | - |
| 94 | W46 | 4.7 | 28 | 1.4 | 2 | 14.0 | Yes | 1.90 | 40 | 20 | - |
| 95 | W47 | 4.3 | 28 | 1.4 | 2 | 14.0 | Yes | 1.90 | 40 | 20 | - |
| 96 | W48 | 4.7 | 28 | 1.4 | 2 | 14.0 | Yes | 1.90 | 40 | 20 | - |
| 97 | W49 | 4.7 | 28 | 1.4 | 2 | 14.0 | Yes | 1.90 | 40 | 20 | - |
| 98 | W50 | 4.5 | 28 | 1.4 | 2 | 14.0 | Yes | 1.90 | 40 | 20 | - |
| 99 | W51 | 5.5 | 28 | 1.4 | 2 | 14.0 | Yes | 1.90 | 40 | 20 | - |
| 100 | W52 | 1.1 | 28 | 1.4 | 2 | 14.0 | Yes | 1.90 | 40 | 20 | - |
| 101 | W53 | 4.0 | 28 | 1.4 | 2 | 14.0 | Yes | 1.90 | 40 | 20 | - |
| 102 | W54 | 4.0 | 28 | 1.4 | 2 | 14.0 | Yes | 1.90 | 40 | 20 | - |
| 103 | W55 | 5.0 | 28 | 1.4 | 2 | 14.0 | Yes | 1.90 | 40 | 20 | - |
| 104 | W56 | 1.4 | 28 | 1.4 | 2 | 14.0 | Yes | 1.90 | 40 | 20 | - |
| 105 | W57 | 4.3 | 28 | 1.4 | 2 | 14.0 | Yes | 1.90 | 40 | 20 | - |
| 106. | W58 | 4.4 | 28 | 1.4 | 2 | 14.0 | Yes | 1.90 | 40 | 20 | - |
| 107 | W59 | 4.3 | 28 | 1.4 | 2 | 14.0 | Yes | 1.90 | 40 | 20 | - |
| 108 | W60 | 0.9 | 28 | 1.4 | 2 | 14.0 | Yes | 1.90 | 40 | 20 | - |
| 109 | W61 | 1.8 | 28 | 1.4 | 2 | 14.0 | Yes | 1.90 | 40 | 20 | - |
| 110 | W62 | 3.0 | 28 | 1.4 | 2 | 14.0 | Yes | 1.90 | 40 | 20 | - |
| 111 | W63 | 4.4 | 28 | 1.4 | 2 | 14.0 | Yes | 1.90 | 40 | 20 | - |
| 112 | W64 | 4.5 | 28 | 1.4 | 2 | 14.0 | Yes | 1.90 | 40 | 20 | - |
| 113 | W65 | 4.3 | 28 | 1.4 | 2 | 14.0 | Yes | 1.90 | 40 | 20 | - |
| 114 | W66 | 4.4 | 28 | 1.4 | 2 | 14.0 | Yes | 1.90 | 40 | 20 | - |
| 115 | W67 | 4.4 | 28 | 1.4 | 2 | 14.0 | Yes | 1.90 | 40 | 20 | - |
| 117 | W68 | 4.5 | 28 | 1.4 | 2 | 14.0 | Yes | 1.90 | 40 | 20 | - |
| 118 | W69 | 4.1 | 28 | 1.4 | 2 | 14.0 | Yes | 1.90 | 40 | 20 | - |
| 119 | W70 | 0.8 | 28 | 1.4 | 2 | 14.0 | Yes | 1.90 | 40 | 20 | - |

The electrogas arc welding was performed under the following conditions:
Welding Current: 380 A
Arc Voltage: 35 V
Welding Speed: 8 cm/min
Amount of Heat Input: 9.9 kJ/mm
Thickness of Base Metal: 19 mm
Groove Shape: V-Groove
Groove Angle: 40°
Gap: 5 to 10 mm (Gap was changed to 5 to 10 mm for adjustment of a groove width.)
Shielding gas: 100% CO₂

The bead appearance, the arc stability, the presence or absence of weld defects, and Charpy values were evaluated in the following method.

### <Bead Appearance>

The bead appearance was evaluated by visually observing a bead of each sample after the end of welding. Samples having a defective bead shape, such as bead meandering, humping, or overlap, were rated as C. On the other hand, samples with the normal bead appearance were rated as A.

### <Arc Stability>

Arc stability was evaluated by measuring an arc voltage in a solution by a data logger. Specifically, samples having a continuous voltage fluctuation of ±5 V or more relative to the preset voltage over 5 seconds were determined to have unstable arc and rated as C. On the other hand, samples having a voltage fluctuation of ±5 V or more which ceased within 5 seconds were rated as B. Furthermore, samples with no voltage fluctuation of ±5 V or more was determined to be better and rated as A.

### <Weld Defects>

Weld defects were evaluated by a method in conformity with a radiation transmission test (see RT: JISZ3104). Samples that were confirmed to have defects were rated as C, while samples that were confirmed to have no defects were rated A.

### <Toughness>

The toughness of welded metal was.evaluated as Charpy absorbed energy (J) at -20°C based on JISZ3128. Specifically, three specimens of each sample were extracted from the center in the cross section of a bead of the sample, and the absorbed energies of these specimens were measured, followed by calculation of an average of the three measurements. According to the specification of a flux-cored wire for electrogas arc welding in conformity with JISZ3319, a Charpy absorbed energy (J) of the flux-cored wire at -20°C is 40 J or more. Samples having a Charpy absorbed energy of less than 40 J were rated as C; samples having a Charpy absorbed energy of more than 40 J were rated as B; and samples having a Charpy absorbed energy of 80 J or more were determined to be much better and rated as A.

### <Operation of Welding Apparatus>

Welding was performed using the apparatus shown in Fig. 5. First, a welding cart was provided on a rail, and a backing material was attached to a base metal. The flux-cored wire was loaded to a wire feeding equipment and fed to the tip of a torch. The welding cart was moved to a weld starting end, and a sliding copper shoe was brought into contact with the base material, followed by centering the sliding copper shoe. A target angle and a target position of the wire were adjusted by a torch adjuster.

A welding voltage and a welding current travel speed were set by an operation box panel, and after the amount of cold water and the flow rate of gas were confirmed, a welding start button on the operation box panel was pressed to permit the cart to start running at the same time as the start of the arc. The adjustment of the protruding length on the operation box panel adjusts the wire to any protruding length, whereby welding was performed with automatically raising control. At a welding end, the welding stop button on the operation box panel was pressed to stop the welding. The results of the evaluations mentioned above are shown in Tables 5 and 6 below.

**[Table 5]**

| NO. | Evaluation | | | | | |
|---|---|---|---|---|---|---|
| | Bead appearance | Arc stability | Welding defect | | Charpy absorber energy (J) at -20°C | |
| 1 | A | A | None | A | 73 | B |
| 2 | A | A | None | A | 76 | B |
| 3 | A | A | None | A | 71 | B |
| 4 | A | A | None | A | 75 | B |
| 5 | A | B | None | A | 62 | B |
| 6 | A | B | None | A | 66 | B |
| 7 | A | B | None | A | 59 | B |
| 8 | A | B | None | A | 64 | B |
| 9 | A | B | None | A | 71 | B |
| 10 | A | B | None | A | 69 | B |
| 11 | A | B | None | A | 67 | B |
| 12 | A | B | None | A | 69 | B |
| 13 | A | A | None | A | 73 | B |
| 14 | A | A | None | A | 78 | B |
| 15 | A | A | None | A | 71 | B |
| 16 | A | A | None | A | 69 | B |
| 17 | A | A | None | A | 73 | B |
| 18 | A | A | None | A | 71 | B |
| 19 | A | B | None | A | 62 | B |
| 20 | A | B | None | A | 67 | B |
| 21 | A | B | None | A | 59 | B |
| 22 | A | B | None | A | 62 | B |
| 23 | A | B | None | A | 69 | B |
| 24 | A | A | None | A | 76 | B |
| 25 | A | A | None | A | 77 | B |
| 26 | A | A | None | A | 72 | B |
| 27 | A | A | None | A | 49 | B |
| 28 | A | A | None | A | 44 | B |
| 29 | A | A | None | A | 52 | B |
| 30 | A | A | None | A | 72 | B |
| 31 | A | A | None | A | 69 | B |
| 32 | A | A | None | A | 74 | B |
| 33 | A | A | None | A | 67 | B |
| 34 | A | A | None | A | 49 | B |
| 35 | A | A | None | A | 71 | B |
| 36 | A | A | None | A | 64 | B |
| 37 | A | A | None | A | 85 | A |
| 38 | A | A | None | A | 81 | A |
| 39 | A | A | None | A | 84 | A |
| 40 | A | B | None | A | 61 | B |
| 41 | A | B | None | A | 59 | B |
| 42 | A | A | None | A | 86 | A |
| 43 | A | A | None | A | 72 | B |
| 44 | A | A | None | A | 77 | B |
| 45 | A | A | None | A | 91 | A |
| 46 | A | B | None | A | 89 | A |
| 47 | A | B | None | A | 93 | A |
| 48 | A | A | None | A | 69 | B |
| 49 | A | A | None | A | 72 | B |
| 50 | A | A | None | A | 69 | B |
| 51 | A | A | None | A | 79 | B |
| 42 | A | A | None | A | 71 | B |
| 53 | A | A | None | A | 68 | B |
| 54 | A | A | None | A | 68 | B |
| 55 | A | A | None | A | 74 | B |
| 56 | A | A | None | A | 57 | B |
| 57 | A | B | None | A | 69 | B |
| 58 | A | B | None | A | 86 | A |
| 59 | A | B | None | A | 72 | B |
| 60 | A | B | None | A | 77 | B |

**[Table 6]**

| No. | Evaluation | | | | | |
|---|---|---|---|---|---|---|
| | Bead appearance | Arc stability | Welding defect | | Charpy absorbed energy (J) at -20°C | |
| 61 | A | B | None | A | 65 | B |
| 62 | A | B | None | A | 78 | B |
| 63 | A | B | None | A | 66 | B |
| 64 | A | B | None | A | 69 | B |
| 65 | A | B | None | A | 71 | B |
| 66 | A | A | None | A | 78 | B |
| 67 | A | A | None | A | 82 | A |
| 68 | A | A | None | A | 77 | B |
| 69 | A | A | None | A | 78 | B |
| 70 | A | A | None | A | 72 | B |
| 71 | A | A | None | A | 79 | B |
| 72 | A | A | None | A | 78 | B |
| 73 | A | A | None | A | 72 | B |
| 74 | A | B | None | A | 51 | B |
| 75 | A | B | None | A | 49 | B |
| 76 | C | C | None | A | 38 | C |
| 77 | C | C | None | A | 32 | C |
| 78 | C | C | Burn-through | C | 57 | B |
| 79 | C | C | Burn-through | C | 49 | B |
| 80 | C | C | Slag inclusion | C | 33 | C |
| 81 | C | C | Slag inclusion | C | 39 | C |
| 82 | C | C | Burn-through | C | 59 | B |
| 83 | C | C | Burn-through | C | 62 | B |
| 84 | C | C | Burn-through | C | 31 | C |
| 85 | C | C | Burn-through | C | 38 | C |
| 86 | C | C | None | A | 42 | B |
| 87 | C | C | None | A | 44 | B |
| 88 | C | C | Burn-through | C | 45 | B |
| 89 | C | C | Burn-through | C | 52 | B |
| 90 | C | C | None | A | 38 | C |
| 91 | C | C | None | A | 34 | C |
| 92 | C | C | Slag inclusion | C | 52 | B |
| 93 | C | C | Slag inclusion | C | 47 | B |
| 94 | A | C | None | A | 49 | B |
| 95 | A | C | None | A | 47 | B |
| 96 | A | C | None | A | 62 | B |
| 97 | A | C | None | A | 52 | B |
| 98 | A | C | None | A | 32 | C |
| 99 | A | B | Slag inclusion | C | 72 | B |
| 100 | A | C | Pore defect | C | 42 | B |
| 101 | A | B | None | A | 37 | C |
| 102 | A | B | Slag inclusion | C | 39 | C |
| 103 | A | B | None | A | 38 | C |
| 104 | C | C | Cracking | C | 54 | B |
| 105 | A | B | Cracking | C | 79 | B |
| 106 | A | B | Cracking | C | 71 | B |
| 107 | A | B | None | A | 28 | B |
| 108 | C | C | Slag inclusion | C | 42 | B |
| 109 | A | B | Slag inclusion | C | 56 | B |
| 110 | A | B | Slag inclusion | C | 49 | B |
| 111 | A | B | Slag inclusion | C | 59 | B |
| 112 | A | B | Slag inclusion | C | 50 | B |
| 113 | A | B | Slag inclusion | C | 42 | B |
| 114 | A | B | Slag inclusion | C | 59 | B |
| 115 | A | B | Slag inclusion | C | 65 | B |
| 116 | A | B | Slag inclusion | C | 71 | B |
| 117 | A | B | Slag inclusion | C | 57 | B |
| 118 | C | C | Slag inclusion | C | 48 | B |

Samples No. 1 to 75 shown in Table 5 mentioned above are Examples that fall within the scope of the present invention, while samples No. 76 to No. 119 shown in Table 6 are Comparative Examples that deviate from the scope of the present invention. As shown in Table 5, in Samples No. 1 to 75 as Examples, the discharge of slag was promoted, and the arc stability, bead appearance, and toughness of welded metal were good with no weld defects.

On the other hand, in Samples No. 76, No. 77, No. 80 and No. 81 as Comparative Examples, the depth of the trench in the sliding copper shoe was small, and W/D was not within an appropriate range, so that the discharge of slag was suppressed, producing a thickened slag bath. This resulted in the embedded wire, unstable arc, defective bead appearance, and reduced toughness of the welded metal due to a change in yield. Samples No. 78, No. 79, and No. 82 to 85 had partly burn-through of the molten metal due to a very deep trench of the sliding copper shoe, worsening the bead appearance.

Samples No. 86 and 87 did not make slag uniform in the bead due to an extremely small width of the sliding copper shoe relative to the groove width, making the bead shape defective. Samples No. 88 and 89 caused burn-through of the molten metal in the bead due to an extremely large width of the sliding copper shoe relative to the groove width, making the bead shape defective. Samples No. 90 to 93 did not perform the control of protruding the wire, made the arc unstable, and caused the defective bead appearance due to the swing of the slag bath.

Sample No. 94 used a welding wire having a diameter of 3.2 mm by way of example, but had bad welding balance for a testing current of 380 A, making the arc unstable. Sample No. 95 used a welding wire having a diameter of 1.4 mm by way of example, but got a larger weld quantity than an optimal one for a testing current of 380 A to thereby raise the position of the molten metal, making it more likely to embed the wire in the molten pool, rendering the arc unstable.

Samples No. 96 and 97 had flux filling rates of 12% by mass and 33% by mass by way of example, respectively, and had bad welding balance for a testing current of 380 A, thus making the arc unstable. Sample No. 98 had an extremely high C content in the welding wire, resulting in unstable arc and reduced toughness of the welded metal due to the extremely high strength thereof. Sample No. 99 used the welding wire having an excessive Si content, and thereby had a large amount of molten slag, causing the slag inclusion. Sample No. 100 used the flux-cored wire having a small Si content, and thereby has little deoxidizing effect, causing pore defects. Sample No. 101 used the flux-cored wire having a small Mn content, and thereby reduced the toughness of the welded metal.

Sample No. 102 used the flux-cored wire having an excessive Mn content, resulting in an extremely high strength of the welded metal with reduced toughness thereof. Sample No. 103 used the flux-cored wire having an excessive Mo content, resulting in an extremely high strength of the welded metal with reduced toughness thereof. Sample No. 104 used the flux-cored wire with an excessive amount of P added; Sample No. 105 used the flux-cored wire with an excessive amount of B added; and Sample No. 106 used the flux-cored wire with an excessive amount of S added. These samples caused cracking in the welded metals.

Sample No. 107 used the flux-cored wire with no Mo, so that the toughness of the welded metal became insufficient. Sample No. 108 generated molten slag that contained TiO₂ and Al₂O₃ as principal components and suppressed the discharge of slag, thus causing the slag inclusion, making the bead shape defective. Samples No. 109 to 115 used the flux-cored wire with an oxide added thereto in an excessive amount, which suppressed the discharge of slag, causing the slag inclusion.

Sample No. 116 used the flux-cored wire with Mg added thereto in an excessive amount, which suppressed the discharge of slag, causing the slag inclusion. Sample No. 117 used the flux-cored wire with SiO₂ added thereto in an excessive amount, which suppressed the discharge of slag, causing the slag inclusion. Sample No. 118 used the flux-cored wire while an amount of SiO₂ added was insufficient to thereby form molten slag that contained TiO₂ and Al₂O₃ as principal components, which suppressed the discharge of slag, thus causing the slag inclusion, making the bead shape defective.

As can be seen from the result mentioned above, the present invention can promote the discharge of slag during the electrogas arc welding, thereby suppressing weld defects while keeping the arc stability, bead shape, and toughness optimal.

This application claims priority on Japanese Patent Application No. 2014-152266 filed on July 25, 2014, the disclosure of which is incorporated by reference herein.

### [Description of Reference Numerals]

- 1:: Base metal
- 2:: Sliding copper shoe
- 3:: Backing material
- 4:: Welding torch
- 5:: Welding wire
- 6:: Welded metal
- 7:: Molten metal
- 8:: Molten slag
- 9:: Molten metal
- 12:: Trench
- 20:: Cart-traveling-motor driving circuit
- 21:: Traveling motor
- 22:: Cart
- 23:: Traveling rail
- 24:: Operation box
- 25:: Welding power supply
- 26:: Wire feed device
- 27:: Shield device

## Claims

1. An electrogas arc welding method that comprises abutting a sliding copper shoe against a surface of a groove in a workpiece to be welded, and performing arc welding while raising the sliding copper shoe and a welding torch,
wherein a welding wire in use is a flux-cored wire that has a flux filled in a steel outer sheath, the flux-cored wire including, relative to a total mass of the wire,
C: 0.01 to 0.50% by mass,
Si: 0.10 to 1.00% by mass,
Mn: 0.50 to 4.00% by mass,
Mo: 0.10 to 1.00% by mass,
-Ti: 0.05 to 0.40% by mass, and
SiO₂: 0.10 to 1.00% by mass, the flux-cored wire further including, in respective limited amounts,
Al: 0.30% or less by mass (including 0%),
S: 0.050% or less by mass (including 0%),
P: 0.050% or less by mass (including 0%),
TiO₂: 0.30% or less by mass (including 0%), and
Al₂O₃: 0.30% or less by mass (including 0%), with the balance being Fe and inevitable impurities, wherein
the flux-cored wire has a composition that satisfies equation (A) below,
wherein the sliding copper shoe has a trench at a surface thereof in contact with the groove, the trench having a curvature,
wherein, when a is a width of the groove,
the trench width W is in a range of (1.1 × a) to (2.5 × a) mm,
the trench depth D is in a range of 0.5 to 5.5 mm, and
a ratio (W/D) of the trench width W to the trench depth D is in a range of 5.0 to 80.0, and
wherein, while a feed speed of the welding wire is set constant, a speed of raising the welding torch is controlled based on welding current such that a protruding length of the welding wire is set constant: $1.0 \leq \left(\left[{SiO}_{2}\right]+2.1\times \left[Si\right]\right) / \left(\left[{Al}_{2}{O}_{3}\right]+1.9\times \left[Al\right]+\left[{TiO}_{2}\right]+1.7\times \left[Ti\right]\right)$ where [SiO₂] is a SiO₂ content, [Si] is a Si content, [Al₂O₃] is an Al₂O₃ content, [Al] is an Al content, [TiO₂] is a TiO₂ content, and [Ti] is a Ti content.

2. The electrogas arc welding method according to claim 1, wherein the flux-cored wire further includes, relative to the total mass of the wire,
Mg: 0.50% or less by mass,
Ni: 2.0% or less by mass,
Cr: 1.0% or less by mass, and
B: 0.005% or less by mass.

3. The electrogas arc welding method according to claim 1 or 2, wherein the flux-cored wire further includes, relative to the total mass of the wire, 0.80% or less by mass in total of at least one kind of oxide selected from MgO, Li₂O, Na₂O, K₂O, CaO, SrO, and BaO.

4. The electrogas arc welding method according to claim 1 or 2, wherein the flux-cored wire has a diameter of 1.5 to 3.5 mm while a flux filling rate is set in a range of 15 to 30% by mass.

5. The electrogas arc welding method according to claim 1 or 2, wherein the control of a speed of raising the welding torch includes the steps of:
removing a high-frequency component from welding current detected by a low-pass filter; and
comparing a welding current value passing through the low-pass filter with a welding current command value previously set,
wherein a cutoff frequency of the low-pass filter may be set at 0.98 to 2.93 Hz.

6. The electrogas arc welding method according to claim 1 or 2, wherein the welding is performed while periodically changing an arc voltage.

7. An electgrogas arc welding apparatus comprising:
a sliding copper shoe that is abutted against a surface of a groove in a workpiece to be welded;
a welding torch adapted to feed a welding wire into the groove;
a torch movement mechanism that moves the welding torch in a front-back direction, an up-down direction, and a right-left direction, with respect to a weld line; and
a control unit adapted to control a speed of raising the welding torch based on welding current,
wherein the sliding copper shoe has a trench at a surface thereof in contact with the groove,
the trench having a curvature, and
wherein, when a is a width of the groove,
the trench width W is in a range of (1.1 × a) to (2.5 × a) mm,
the trench depth D is in a range of 0.5 to 5.5 mm, and
a ratio (W/D) of the trench width W to the trench depth D is in a range of 5.0 to 80.0.
